# EUROPÄISCHE PATENTSCHRIFT

(11) **EP 3 041 690 B1**
(45) Veröffentlichungstag und Bekanntmachung des Hinweises auf die Patenterteilung: **27.02.2019**
(21) Anmeldenummer: 14736837.7
(22) Anmeldetag: 09.07.2014
(51) Int. Cl.: B60C 9/09, B60C 9/14, B60C 15/00

(54) **FAHRZEUGLUFTREIFEN**
PNEUMATIC VEHICLE TYRE
PNEUMATIQUE DE VÉHICULE

(30) Priorität: 03.09.2013 DE 102013109582
(43) Veröffentlichungstag der Anmeldung: 13.07.2016
(73) Patentinhaber: Continental Reifen Deutschland GmbH, 30165 Hannover (DE)
(72) Erfinder: VOLK, Heiner, 31535 Neustadt (DE); KRISHNAMURTHY, Kumar, 30173 Hannover (DE); BECKMANN, Bernd, 31157 Sarstedt-Hotteln (DE); HOLSTE, Werner, 30539 Hannover (DE); GABOR, Peter, 01852 Pruske (SK)
(74) Vertreter: Finger, Karsten
(86) Internationale Anmeldenummer: PCT/EP2014/064661
(87) Internationale Veröffentlichungsnummer: WO 2015/032526

(56) Entgegenhaltungen:
- EP-A1- 0 911 188
- EP-A2- 0 881 105
- WO-A1-2009/103733
- US-B1- 6 439 283

## Beschreibung

Die Erfindung betrifft einen Fahrzeugluftreifen mit Gürtellagen, zwei Wulstbereichen mit Wulstkern und Apex, mit wenigstens einer radial orientierte Festigkeitsträger aufweisenden Karkasslage, wobei die Karkasslage den Reifen von Wulstbereich zu Wulstbereich durchläuft sowie die Wulstbereiche jeweils von axial innen nach axial außen umschlingt und jeweils in einem Karkasshochschlag endet und mit einer zusätzlichen Festigkeitsträgerlage, welche axial außen auf der Karkasslage angeordnet ist, wobei - im Reifenquerschnitt betrachtet - deren radial inneres Ende auf Höhe des Wulstbereiches zwischen Karkasslage und Apex angeordnet ist und deren radial äußeres Ende unterhalb einer Gürtellage angeordnet ist,wobei die Festigkeitsträger der zusätzlichen Festigkeitsträgerlage kreuzend zu den Festigkeitsträgern der Karkasslage angeordnet sind und wobei zwischen der Karkasslage und der zusätzlichen Festigkeitsträgerlage eine Gummilage angeordnet ist.

Ein derartiger Fahrzeugluftreifen ist aus der WO 2009/103733 A1 bekannt. Der Fahrzeugluftreifen ist aufgrund von im Querschnitt mondsichelförmigen Verstärkungsprofilen, von welchen je ein Verstärkungsprofil in jeder Reifenseitenwand angeordnet ist, auch bei Druckluftverlust über eine gewisse Fahrtstrecke notlauffähig. Axial außen in Bezug auf die Verstärkungsprofile ist je eine zusätzliche Festigkeitsträgerlage angeordnet.

Aus der EP 0 911 188 A1 ist ebenfalls ein Notlaufreifen mit verstärkter Seitenwand bekannt, welcher eine zusätzliche Verstärkungslage zwischen Karkasse und Gürtel aufweist.

Aus der EP 0 881 105 A2 ist ein Fahrzeugluftreifen in Radialbauart bekannt, welcher in jeder Seitenwand innerhalb einer Reifenquerschnittshöhe zwischen 50 und 90% wenigstens eine Festigkeitsträgerlage zur Versteifung dieses Bereiches der Reifenquerschnittshöhe angeordnet ist.

Aus der EP 0 301 093 B1 ist ein Fahrzeugluftreifen mit zusätzlicher Festigkeitsträgerlage bekannt, wobeidie zusätzliche Festigkeitsträgerlage unmittelbar auf der Karkasslage aufliegt, so dass zwei Festigkeitsträger aufweisende Lagen unmittelbar aufeinander aufliegen.

Die Festigkeitsträger aufweisenden Lagen wie beispielsweise die Karkasslage oder die zusätzliche Festigkeitsträgerlage sind gummierte Festigkeitsträgerlagen. Diese werden hergestellt, indem die Festigkeitsträger im Kalander mit einer Gummierungsschicht überzogen und vollständig in diese eingebettet werden.

Es hat sich jedoch gezeigt, dass bei Belastung des vorgenannten Reifens die einander zugewandten Gummierungsschichten der Karkasslage und der zusätzlichen Festigkeitsträgerlage stark beansprucht und geschädigt werden können. Die nur durch vergleichsweise dünne Gummierungsschichten getrennten Festigkeitsträger beider Lagen können die Gummierungsschichten soweit schädigen, dass die Festigkeitsträger der Karkasslage und die der zusätzlichen Festigkeitsträgerlage unmittelbar in Kontakt kommen. Die hierdurch entstehenden Scheuerkontakte zwischen den Festigkeitsträgern beider Lagen können die Haltbarkeit des Fahrzeugluftreifens stark herabsetzen.

Es ist daher die Aufgabe der vorliegenden Erfindung, einen Fahrzeugluftreifen mit zusätzlicher Festigkeitsträgerlage bereitzustellen, der jedoch in Bezug auf seine Haltbarkeit verbessert ist.

Die Aufgabe wird gelöst, indem. die Gummilage aus Material der Gummierung der Karkasslage besteht. Die unterschiedlichen Lagen können durch die Verwendung des gleichen Gummierungsmaterials während der Vulkanisation des Reifenrohlings besser untereinander angebunden werden, wodurch eine Lagentrennung vermieden und die Haltbarkeit des Reifens weiter verbessert ist.

Erfindungswesentlich ist, dass zum Schutz vor den vorbeschriebenen Scheuerkontakten zwischen den Festigkeitsträgern der Karkasslage und denen der zusätzlichen Verstärkungslage eine Gummilage angeordnet ist. Hierdurch liegen beide Festigkeitsträger enthaltende Lagen nicht mehr unmittelbar aufeinander auf und es ist somit verhindert, dass die Festigkeitsträger beider vorgenannten Lagen in unmittelbaren Kontakt kommen können. Die Haltbarkeit des Fahrzeugluftreifens ist verbessert.

Mit "Karkasslage" ist in Bezug auf die Anordnung der zusätzlichen Verstärkungslage nicht der Karkasshochschlag gemeint.
Das radial innere Ende der zusätzlichen Festigkeitsträgerlage ist zwischen Karkasslage und Wulstbereich angeordnet und endet vorzugsweise entweder auf Höhe des Apex, wobei das Ende zwischen Karkasslage und Apex liegt, oder endet axial innen oder axial außen in Bezug auf den Wulstkern oder unterhalb des Wulstkernes.

Vorteilhaft ist es, wenn die Festigkeitsträger der zusätzlichen Festigkeitsträgerlage in einem Winkel im Bereich von +(-) 25° und +(-) 45°, vorzugsweise in einem Winkel von etwa +(-) 35° in Bezug auf die radiale Richtung angeordnet sind. Der Differenzwinkel von etwa +(-) 35° erlaubt eine sehr effektive Kopplung der Festigkeitsträgerlage mit der Karkasslage. "+(-)" bedeutet, dass die Festigkeitsträger entweder fallend oder steigend in der zusätzlichen Festigkeitsträgerlage angeordnet sind.

Zweckmäßig ist es, wenn die Festigkeitsträger der Karkasslage und die Festigkeitsträger der zusätzlichen Festigkeitsträgerlage in Konstruktion und Material identisch sind. Bei gekoppelten Festigkeitsträgerlagen, wie hier die zusätzliche Festigkeitsträgerlage mit der Karkasslage, bestimmt der schwächere Kord die Kordkräfte in den gekoppelten Lagen. Verwendet man identische Korde, ist eine sehr wirtschaftliche Konstruktion erreicht, bei der keine der Lagen über- oder unterdimensioniert ist.

Zweckmäßig ist es, wenn die Festigkeitsträger der Karkasslage und die Festigkeitsträger der zusätzlichen Festigkeitsträgerlage in identischer Dichte in diesen vorgenannten Lagen angeordnet sind. Hierdurch ist eine sehr wirtschaftliche Konstruktion erreicht, bei der keine der beiden vorgenannten Lagen über- oder unterdimensioniert ist.

Die Haltbarkeit des Fahrzeugluftreifens ist verbessert, indem das Material der Gummierung der Karkasslage, das Material, aus der die zusätzliche Festigkeitsträgerlage ist sowie das Material aus der die Gummilage besteht, identisch ist. Die unterschiedlichen Lagen können durch die Verwendung des gleichen Gummierungsmaterials während der Vulkanisation des Reifenrohlings besser untereinander angebunden werden, wodurch eine Lagentrennung vermieden und die Haltbarkeit des Reifens weiter verbessert ist.

Vorteilhaft ist es, wenn die Gummilage eine Dicke im Bereich von 0,1 mm - 0,6 mm, vorzugsweise von etwa 0,4 mm aufweist. Bei dieser Dicke übernimmt die Gummilage die auftretende mechanische Belastung ohne Probleme. Bei einer größeren Dicke würde unnötig zusätzlicher Rollwiderstand erzeugt werden.

Zweckmäßig ist es, wenn sich die Gummilage über eine geringere Höhe als die zusätzliche Festigkeitsträgerlage erstreckt und somit kürzer als die zusätzliche Festigkeitsträgerlage ist und vorzugsweise an ihrem oberen Ende und ihrem unteren Ende etwa 5 mm vor den betreffenden Enden der zusätzlichen Festigkeitsträgerlage endet. Die größten Scherbelastungen entstehen im Bereich der Biege- oder Flexingzone des Reifens, also eher auf mittiger Höhe der Seitenwand. Die sich auch über diese mittige Höhe der Seitenwand erstreckende Gummilage nimmt die Scherbelastungen auf.

Zweckmäßig ist es, wenn der Karkasshochschlag in einer Höhe endet, die außerhalb des Apex liegt und zwar 5 mm - 15 mm, vorzugsweises etwa 7 mm oberhalb des oberen Apexendes liegt. Hierdurch sind große Steifigkeitssprünge in der Seitenwand vermieden.

Zweckmäßig ist es, wenn die Karkasslage eine sogenannte C-Karkasslagenkonstruktion ist, deren Karkasshochschlag unterhalb der radial innersten Gürtellage endet und somit mit dieser teilweise überlappt. Hierbei erfolgt die Kopplung der Festigkeitsträgerlage sowohl zur Karkasslage als auch zum Karkassumschlag. Diese Konstruktion ist dadurch besonders robust.

Der erfindungsgemäße Fahrzeugluftreifen ist vorzugsweise ein PKW-Niederquerschnittsreifen. Die Seitenwände von Niederquerschnittsreifen werden aufgrund ihrer geringen Seitenwandhöhe besonders stark auf Biegung beansprucht. Um Ausfälle durch Risse bzw. Beschädigungen in der Seitenwand der eingangs genannten Art zu vermeiden, ist zur Verstärkung der Seitenwand zusätzlich zur zusätzlichen Festigkeitsträgerlage eine Gummilage zwischen Karkasslage und dieser zusätzlichen Festigkeitsträgerlage eingebracht.

Weitere Merkmale, Vorteile und Einzelheiten der Erfindung werden anhand der Zeichnung, die ein schematisches Ausführungsbeispiel darstellt, näher erläutert.

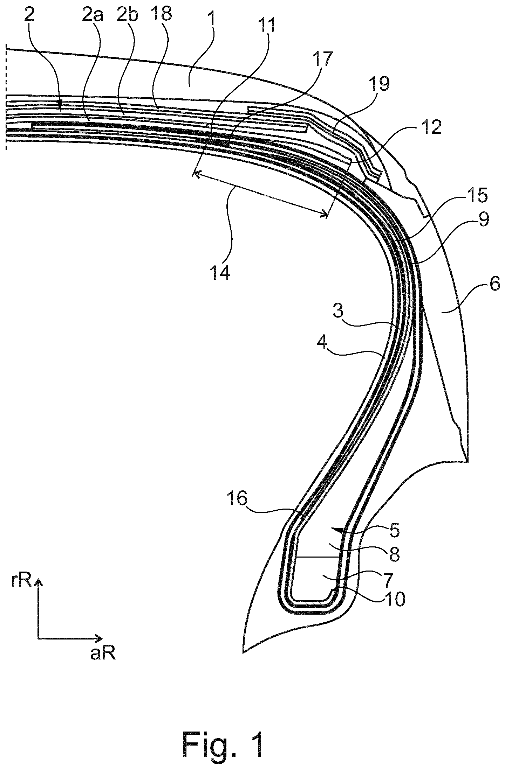

Die **Fig.1** zeigt einen Teil-Querschnitt durch einen Niederquerschnitts-Radialreifen für Personenkraftwagen, welcher einen profilierten Laufstreifen 1, einen aus zwei Gürtellagen 2a, 2b, bestehenden Gürtel 2, welcher durch eine Bandage 18 und einen Gürtelkantenabdeckung 19 abgedeckt ist, eine Radialkarkasslage 3, eine luftdicht ausgeführte Innenschicht 4, Seitenwände 6 sowie Wulstbereiche 5 mit Wulstkernen 7 und Apexen 8 aufweist. Die Lagen 2a, 2b des Gürtels 2 bestehen aus in eine Gummimischung eingebetteten Festigkeitsträgern aus Stahlcord, welche innerhalb jeder Lage parallel zueinander verlaufen, wobei die Stahlcorde der Lagen in kreuzender Anordnung zu den Stahlcorden der benachbarten Lage orientiert sind und mit der Reifenumfangsrichtung jeweils einen Winkel zwischen 24° und 46° einschließen.

Die Karkasslage 3 umschlingt die Wulstbereiche 5 von axial innen nach axial außen und endet jeweils als C-Lagenkonstruktion unterhalb des Bereiches der Kante 12 der radial innersten Gürtellage 2a und überlappt somit teilweise mit dieser. Der Radialreifen weist eine zusätzliche Festigkeitsträgerlage 9 auf, welche axial außen in Bezug auf die Karkasslage 3 angeordnet ist. Das untere Ende 10 dieser zusätzlichen Festigkeitsträgerlage 9 liegt auf Höhe des Wulstbereiches 5, genauer gesagt im Bereich des Apex 8. Das obere Ende 11 dieser zusätzlichen Festigkeitsträgerlage 9 liegt unterhalb des Kantenbereiches der Gürtellage 2a. Die Überlappung 14 wird in entlang des Lagenverlaufes von der Kante 13 dieser Gürtellage 2a bis zum oberen Ende 11 der zusätzlichen Festigkeitsträgerlage 9 gemessen und beträgt etwa 15 mm. Die Festigkeitsträger der zusätzlichen Festigkeitsträgerlage 9 sind kreuzend zu den Festigkeitsträgern der Karkasslage 3 angeordnet und verlaufen in einem Winkel von etwa 35° in Bezug auf die radiale Richtung rR. Zwischen der Karkasslage 3 und der zusätzlichen Festigkeitsträgerlage 9 ist eine Gummilage 15 angeordnet.

Die Festigkeitsträger der Karkasslage 3 und die Festigkeitsträger der zusätzlichen Festigkeitsträgerlage 9 sind in Konstruktion und Material, hier Rayon, sowie in ihrer Dichte (epdm) identisch. Ebenfalls ist das Material der Gummierung der Karkasslage 3, das Material der Gummierung der zusätzlichen Festigkeitsträgerlage 9 sowie das Material, aus dem die Gummilage 15 besteht, identisch. Die Gummilage 15 weist eine Dicke von etwa 0,4 mm auf. Die Gummilage 15 erstreckt sich über eine geringere Höhe als die zusätzliche Festigkeitsträgerlage 9 und ist somit kürzer als die zusätzliche Festigkeitsträgerlage 9. Die Gummilage 15 endet an ihrem oberen Ende 17 und ihrem unteren Ende 16 etwa 5 mm vor den betreffenden Enden 11, 10 der zusätzlichen Festigkeitsträgerlage 9. Die Höhe wird entsprechend der Lagenkontur in radialer Richtung rR gemessen.

## Patentansprüche

1. Fahrzeugluftreifen mit Gürtellagen (2a, 2b), zwei Wulstbereichen (5) mit Wulstkern (7) und Apex (8), mit wenigstens einer radial orientierte Festigkeitsträger aufweisenden Karkasslage (3), wobei die Karkasslage (3) den Reifen von Wulstbereich (5) zu Wulstbereich (5) durchläuft, die Wulstbereiche (5) jeweils von axial innen nach axial außen umschlingt und jeweils in einem Karkasshochschlag (3a) endet und mit einer zusätzlichen Festigkeitsträgerlage (9), welche axial außen auf der Karkasslage (3) angeordnet ist, wobei - im Reifenquerschnitt betrachtet - deren radial inneres Ende (10) auf Höhe des Wulstbereich (5) angeordnet ist und deren radial äußeres Ende (11) unterhalb einer Gürtellage (2a, 2b) angeordnet ist und wobei die Festigkeitsträger der zusätzlichen Festigkeitsträgerlage kreuzend zu den Festigkeitsträgern der Karkasslage (3) angeordnet sind
und wobei zwischen der Karkasslage (3) und der zusätzlichen Festigkeitsträgerlage (9) eine Gummilage (15) angeordnet ist,
**dadurch gekennzeichnet, dass**
die Gummilage (15) aus Material der Gummierung der Karkasslage (3) besteht.

2. Fahrzeugluftreifen nach Anspruch 1,
**dadurch gekennzeichnet, dass** die Festigkeitsträger der zusätzlichen Festigkeitsträgerlage (9) in einem Winkel im Bereich von 25° und 45°, vorzugsweise in einem Winkel von etwa 35° in Bezug auf die radiale Richtung angeordnet sind.

3. Fahrzeugluftreifen nach einem der vorangehenden Ansprüche,
**dadurch gekennzeichnet, dass** die Festigkeitsträger der Karkasslage (3) und die Festigkeitsträger der zusätzlichen Festigkeitsträgerlage (9) in Konstruktion und Material identisch sind.

4. Fahrzeugluftreifen nach einem oder mehreren der vorangehenden Ansprüche, **dadurch gekennzeichnet, dass** die Festigkeitsträger der Karkasslage (3) und die Festigkeitsträger der zusätzlichen Festigkeitsträgerlage (9) in identischer Dichte in diesen vorgenannten Lagen angeordnet sind.

5. Fahrzeugluftreifen nach einem der vorangehenden Ansprüche,
**dadurch gekennzeichnet, dass** das Material der Gummierung der Karkasslage (3) und das Material der Gummierung der zusätzlichen Festigkeitsträgerlage (9) identisch sind.

6. Fahrzeugluftreifen nach einem oder mehreren der vorangehenden Ansprüche, **dadurch gekennzeichnet, dass** die Gummilage (15) eine Dicke im Bereich von 0,1 mm - 0,6 mm, vorzugsweise von etwa 0,4 mm aufweist.

7. Fahrzeugluftreifen nach einem oder mehreren der vorangehenden Ansprüche, **dadurch gekennzeichnet, dass** sich die Gummilage (15) über eine geringere radiale Ausdehnung als die zusätzliche Festigkeitsträgerlage (9) erstreckt und somit kürzer als die zusätzliche Festigkeitsträgerlage (9) ist und vorzugsweise an ihrem radial äußeren Ende (17) und ihrem radial inneren Ende (16) etwa 5 mm vor den betreffenden Enden (11, 10) der zusätzlichen Festigkeitsträgerlage (9) endet.

8. Fahrzeugluftreifen nach einem oder mehreren der vorangehenden Ansprüche, **dadurch gekennzeichnet, dass** der Karkasshochschlag (3a) in einer Höhe endet, die radial außerhalb des Apex (8) liegt.

9. Fahrzeugluftreifen nach einem oder mehreren der vorangehenden Ansprüche, **dadurch gekennzeichnet, dass** die Karkasslage (3) eines sogenannte C-Karkasslagenkonstruktion ist.

10. Fahrzeugluftreifen nach einem oder mehreren der vorangehenden Ansprüche, **dadurch gekennzeichnet, dass** dieser ein PKW-Niederquerschnittsreifen ist.

## Claims

1. Vehicle pneumatic tyre with belt layers (2a, 2b), two bead regions (5) with a bead core (7) and an apex (8), with at least one carcass layer (3) which has radially oriented strength supports, the carcass layer (3) running through the tyre from bead region (5) to bead region (5), wrapping around the bead regions (5) in each case from the axial inside to the axial outside, and ending in each case in a carcass turn-up (3a), and with an additional strength support layer (9) which is arranged on the carcass layer (3) axially on the outside, its radially inner end (10) being arranged at the level of the bead region (5), as viewed in the tyre cross section, and its radially outer end (11) being arranged below a belt layer (2a, 2b), and the strength supports of the additional strength support layer being arranged so as to cross the strength supports of the carcass layer (3),and a rubber layer (15) being arranged between the carcass layer (3) and the additional strength support layer (9), **characterized in that** the rubber layer (15) consists of material of the rubber coating of the carcass layer (3).

2. Vehicle pneumatic tyre according to Claim 1, **characterized in that** the strength supports of the additional strength support layer (9) are arranged at an angle in the range from 25° to 45°, preferably at an angle of approximately 35° in relation to the radial direction.

3. Vehicle pneumatic tyre according to either of the preceding claims, **characterized in that** the strength supports of the carcass layer (3) and the strength supports of the additional strength support layer (9) are identical in terms of construction and material.

4. Vehicle pneumatic tyre according to one or more of the preceding claims, **characterized in that** the strength supports of the carcass layer (3) and the strength supports of the additional strength support layer (9) are arranged in an identical density in the said abovementioned layers.

5. Vehicle pneumatic tyre according to one of the preceding claims, **characterized in that** the material of the rubber coating of the carcass layer (3) and the material of the rubber coating of the additional strength support layer (9) are identical.

6. Vehicle pneumatic tyre according to one or more of the preceding claims, **characterized in that** the rubber layer (15) has a thickness in the range from 0.1 mm to 0.6 mm, preferably of approximately 0.4 mm.

7. Vehicle pneumatic tyre according to one or more of the preceding claims, **characterized in that** the rubber layer (15) extends over a smaller radial extent than the additional strength support layer (9) and is therefore shorter than the additional strength support layer (9), and preferably ends at its radially outer end (17) and its radially inner end (16) approximately 5 mm before the relevant ends (11, 10) of the additional strength support layer (9).

8. Vehicle pneumatic tyre according to one or more of the preceding claims, **characterized in that** the carcass turn-up (3a) ends at a level which lies radially outside the apex (8).

9. Vehicle pneumatic tyre according to one or more of the preceding claims, **characterized in that** the carcass layer (3) is what is known as a C-ply carcass layer construction.

10. Vehicle pneumatic tyre according to one or more of the preceding claims, **characterized in that** it is a car low profile tyre.

## Revendications

1. Pneumatique de véhicule avec des nappes de ceinture (2a, 2b), deux zones de talon (5) avec tringle de talon (7) et sommet (8), avec au moins une nappe de carcasse (3) présentant des éléments de résistance orientés radialement, dans lequel la nappe de carcasse (3) traverse le pneumatique d'une zone de talon (5) à l'autre zone de talon (5), entoure les zones de talon (5) respectivement du côté axialement intérieur au côté axialement extérieur et se termine respectivement en un retournement de nappe de carcasse (3a), et avec une nappe supplémentaire d'éléments de résistance (9), qui est disposée axialement à l'extérieur sur la nappe de carcasse (3), dans lequel - en considérant la section transversale du pneumatique - son extrémité radialement intérieure (10) est disposée à hauteur de la zone de talon (5) et son extrémité radialement extérieure (11) est disposée en dessous d'une nappe de ceinture (2a, 2b) et dans lequel les éléments de résistance de la nappe supplémentaire d'éléments de résistance sont disposés en croisement avec les éléments de résistance de la nappe de carcasse (3), et dans lequel une couche de gomme (15) est disposée entre la nappe de carcasse (3) et la nappe supplémentaire d'éléments de résistance (9), **caractérisé en ce que** la couche de gomme (15) est constituée de matière du revêtement en caoutchouc de la nappe de carcasse (3).

2. Pneumatique de véhicule selon la revendication 1, **caractérisé en ce que** les éléments de résistance de la nappe supplémentaire d'éléments de résistance (9) sont disposés sous un angle compris dans la plage de 25° à 45°, de préférence sous un angle d'environ 35°, par rapport à la direction radiale.

3. Pneumatique de véhicule selon l'une quelconque des revendications précédentes, **caractérisé en ce que** les éléments de résistance de la nappe de carcasse (3) et les éléments de résistance de la nappe supplémentaire d'éléments de résistance (9) sont identiques en construction et en matière.

4. Pneumatique de véhicule selon une ou plusieurs des revendications précédentes, **caractérisé en ce que** les éléments de résistance de la nappe de carcasse (3) et les éléments de résistance de la nappe supplémentaire d'éléments de résistance (9) sont disposés avec une densité identique dans ces nappes précitées.

5. Pneumatique de véhicule selon l'une quelconque des revendications précédentes, **caractérisé en ce que** la matière du revêtement en caoutchouc de la nappe de carcasse (3) et la matière du revêtement en caoutchouc de la nappe supplémentaire d'éléments de résistance (9) sont identiques.

6. Pneumatique de véhicule selon une ou plusieurs des revendications précédentes, **caractérisé en ce que** la couche de gomme (15) présente une épaisseur comprise dans la plage de 0,1 mm à 0,6 mm, de préférence d'environ 0,4 mm.

7. Pneumatique de véhicule selon une ou plusieurs des revendications précédentes, **caractérisé en ce que** la couche de gomme (15) s'étend sur une extension radiale moindre que la nappe supplémentaire d'éléments de résistance (9) et est dès lors plus courte que la nappe supplémentaire d'éléments de résistance (9) et se termine de préférence à son extrémité radialement extérieure (17) et à son extrémité radialement intérieure (16) environ 5 mm avant les extrémités correspondantes (11, 10) de la nappe supplémentaire d'éléments de résistance (9).

8. Pneumatique de véhicule selon une ou plusieurs des revendications précédentes, **caractérisé en ce que** le retournement de nappe de carcasse (3a) se termine à une hauteur, qui est située radialement à l'extérieur du sommet (8).

9. Pneumatique de véhicule selon une ou plusieurs des revendications précédentes, **caractérisé en ce que** la nappe de carcasse (3) est une construction de nappe de carcasse dite en C.

10. Pneumatique de véhicule selon une ou plusieurs des revendications précédentes, **caractérisé en ce que** celui-ci est un pneu taille basse pour voiture de tourisme.
